# FASCICULE DE BREVET EUROPEEN

(11) **EP 0 703 554 B1**
(45) Date de publication et mention de la délivrance du brevet: **30.06.1999**
(21) Numéro de dépôt: 94440062.1
(22) Date de dépôt: 26.09.1994
(51) Int. Cl.: G08G 1/005, G09B 21/00

(54) **Aide aux piétons malvoyants pour traverser la chaussée**
Hilfe für sehbehinderte Fussgänger zum Überqueren der Strasse
Pedestrian crossing aid for the visually impaired

(43) Date de publication de la demande: 27.03.1996
(73) Titulaire: ETABLISSEMENTS CRAPIE, 69200 Vénissieux (FR)
(72) Inventeur: Poinsignon, Pierre, F-69008 Lyon (FR)
(74) Mandataire: Guerre, Dominique

(56) Documents cités:
- WO-A-87/06751
- FR-A- 2 375 672
- FR-A- 2 481 491
- FR-A- 2 690 334
- FR-A- 2 705 815
- US-A- 5 103 223

## Description

La présente invention concerne un dispositif permettant aux déficients visuels de repérer leur position en milieu urbain, et à toute personne de connaître le moment opportun pour traverser la chaussée sur le passage pour piétons.

Aujourd'hui, les seuls moyens dont disposent les aveugles pour se déplacer seuls en milieu urbain restent le comptage des rues et des pas et l'écoute des sons, notamment de la circulation ou des répétiteurs sonores. Par ailleurs, ce qui est mis à disposition de l'ensemble de la population piétonne pour la traversée des chaussées est disparate.

Le dispositif selon l'invention constitue un perfectionnement de celui qui fait l'objet de la FR-A-2 690 334, en rassemblant dans une seule et même borne des moyens permettant aux déficients visuels de se repérer en milieu urbain.

Le dispositif selon l'invention permet d'informer les aveugles en faisant appel à leur sens tactile et/ou auditif à l'aide d'informations de type braille par exemple. A cet effet il renferme dans un boîtier, qui peut être par exemple cylindrique, un système vibratoire qui, couplé au feu piétons, permet d'indiquer, par une vibration dont la durée peut être ou non la même que celle du feu vert piétons, le moment opportun pour traverser la chaussée sur le passage pour piétons. Par ailleurs, un système lumineux, composé de diodes électroluminescentes vertes et rouges, permet de fournir la même indication en faisant appel à la vue.

L'invention est définie par les revendications ci-jointes.

Dans une variante du dispositif selon l'invention, la partie supérieure de la borne peut constituer un bouton poussoir, sa partie supérieure s'enfonçant et permettant d'activer grâce à un interrupteur la demande de passage au vert. Pour signaler la bonne prise en compte de la demande, un système sonore peut dans ce cas informer les usagers, par exemple par un message vocal ou mélodique.

La borne sensitive selon l'invention peut d'autre part être le support d'autres informations, tactiles, vibratoires, lumineuses ou sonores en d'autres lieux qu'à proximité de passages pour piétons.

La présente invention sera mieux comprise à la lecture de la description qui suit et qui se réfère au dessin annexé, dans lequel :
- la figure 1 représente une vue en coupe du dispositif selon l'invention.

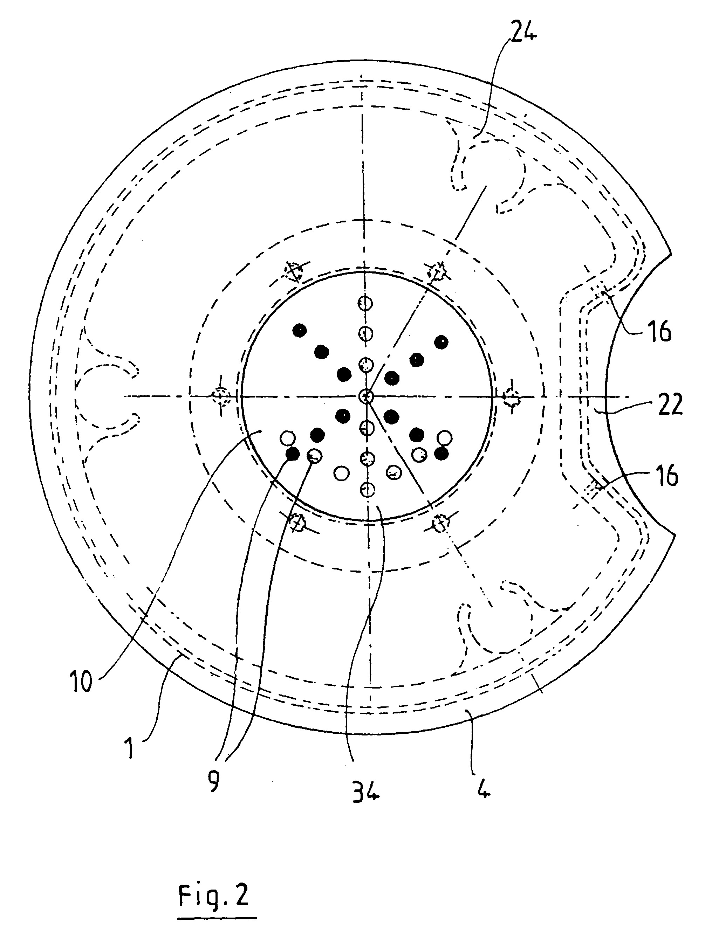

- la figure 2 représente une vue de dessus du même dispositif.
- la figure 3 représente le dispositif selon l'invention en place sur le poteau d'un feu tricolore.

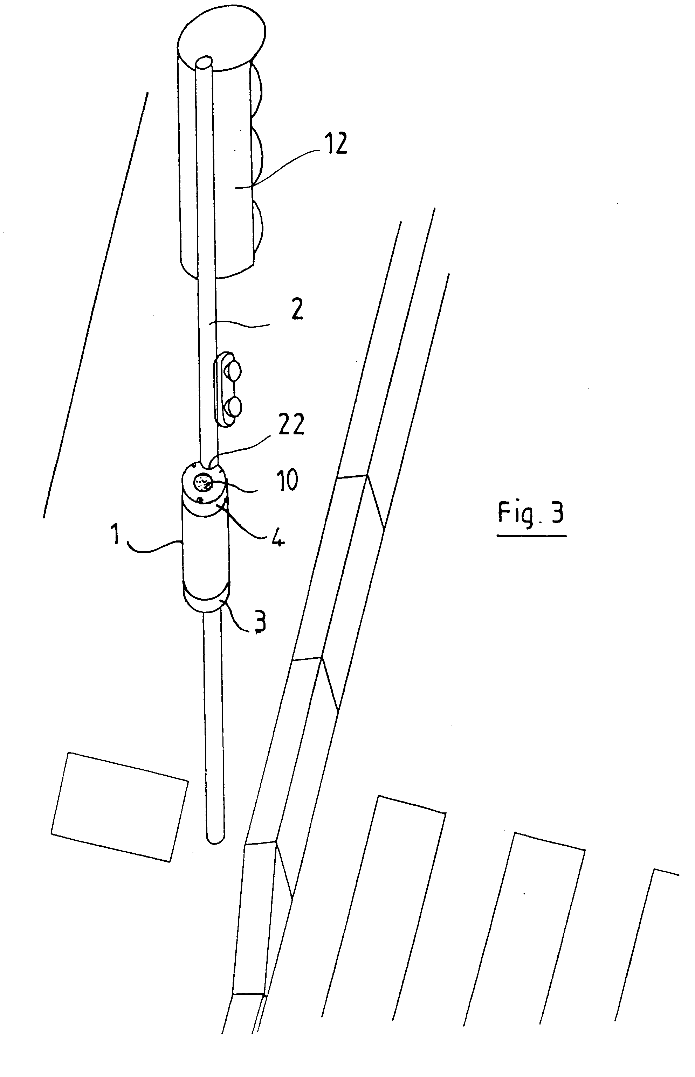

Si on se réfère à ces figures on peut voir qu'un dispositif selon l'invention comporte un boîtier 1 de forme cylindrique, positionné verticalement et solidarisé longitudinalement à un poteau 2, par exemple le poteau d'un feu tricolore 12, visible sur la figure 3, son extrémité supérieure étant de préférence distante du sol de 80 à 100 cm.

Le boîtier 1 comporte longitudinalement un évidement 22 de section en V à fond plat, permettant son adaptation sur le poteau 2 quelle que soit la section de celui-ci, la solidarisation au poteau 2 étant réalisée par vissage au travers d'orifices 21 pratiqués dans l'évidement 22.

Le boîtier 1 est fermé à ses extrémités supérieure et inférieure par des capots, respectivement 4 et 3.

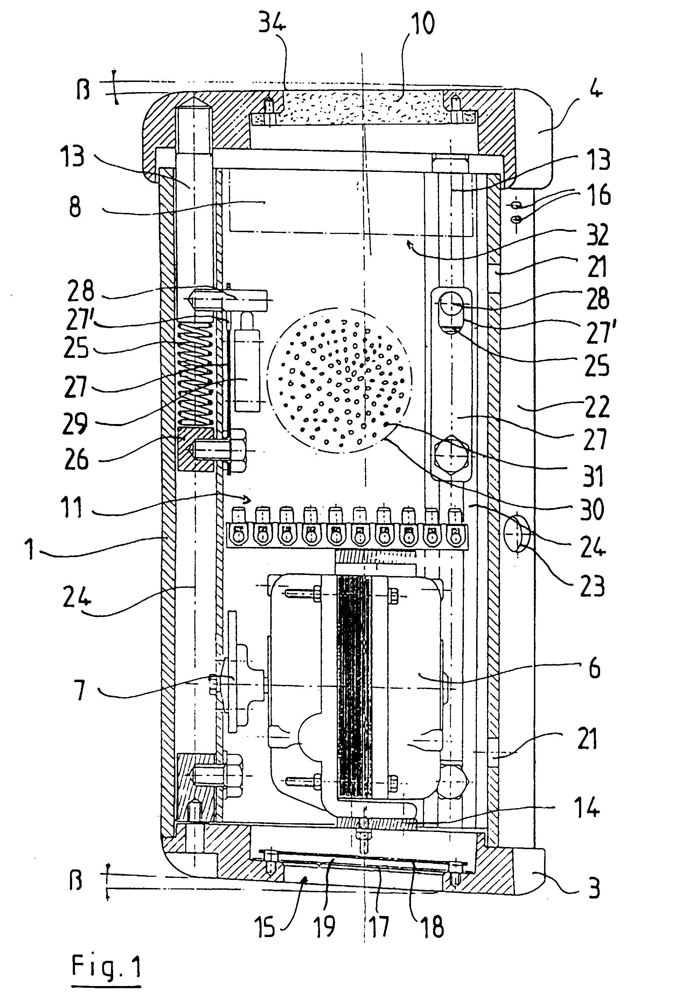

A la face interne du capot supérieur 4 sont solidarisées trois colonnes 13, dont deux sont visibles sur la figure 1, aptes à coulisser dans des glissières verticales 24 solidaires du boîtier 1, l'extrémité inférieure de chacune des colonnes 13 venant en appui sur un ressort 25 lui-même en appui sur un limiteur de position 26 solidaire du boîtier 1, et chacune des colonnes 13 comportant, au voisinage de son extrémité inférieure, un ergot 28 saillant perpendiculairement, engagé dans l'orifice 27', oblong dans le sens vertical, d'une biellette 27 solidaire du boîtier 1, l'ensemble contribuant à permettre un déplacement vertical limité du capot supérieur 4 par rapport au boîtier 1.

Lorsqu'une pression est exercée par un usager sur le capot supérieur 4, l'un des ergots saillants 28 appuie sur un interrupteur 29 électriquement relié à un bornier 11.

Le boîtier 1 renferme un répétiteur sonore 30 disposé en regard d'une partie de la paroi du boîtier 1 percée d'une multiplicité d'orifices 31 permettant le passage du son, le répétiteur sonore 30 étant relié par l'intermédiaire du bornier 11 à l'interrupteur 29, le son émis signifiant la prise en compte de la demande.

Le boîtier 1 renferme également un dispositif générant des vibrations, en l'occurrence un moteur 6 à rondelle excentrique 7, fixé sur une barrette 14 solidaire du boîtier 1 à sa base.

Le capot supérieur 4 comporte une partie translucide 10, réalisée par exemple en polycarbonate, laissant voir depuis l'extérieur des informations lumineuses intermittentes émises par un module lumineux 8 incorporant des diodes électroluminescentes 9, placé dans une cavité 32 du boîtier 1, sous le capot supérieur 4, et connecté également au bornier 11.

Le bornier 11 est relié, par l'intermédiaire d'un conducteur passant par un orifice 23 percé dans l'évidement 22, au feu de signalisation tricolore 12, lequel peut ainsi alimenter le moteur 6 et le module lumineux 8.

Le boîtier 1 est ventilé par l'intermédiaire d'orifices latéraux 16 pratiqués dans l'évidement 22, et d'une ouverture 15 pratiquée dans le capot inférieur 3, laquelle permet également l'écoulement des eaux de pluie.

Les orifices 16 et l'ouverture 15 sont protégés contre la pénétration des corps indésirables tels que les insectes, par une toile de tamis 17. De plus, afin d'empêcher l'introduction de corps rigides dans le boîtier 1, la toile de tamis 17 fermant l'ouverture 15 est surmontée à courte distance d'un cache rigide 18 laissant un interstice 19 suffisant pour le passage de l'air et de l'eau.

Afin de permettre l'écoulement des eaux de pluie les capots inférieur 3 et supérieur 4 sont légèrement inclinés d'un angle β par rapport à l'horizontale.

De plus le capot supérieur 4 et/ou la paroi externe du boîtier 1 peuvent comporter des informations, en braille notamment, figurant par exemple sur un support translucide du type adhésif, collé sur la face supérieure 34 du capot supérieur 4.

Le fonctionnement du dispositif selon l'invention est le suivant : lorsqu'un usager exerce une pression sur le capot supérieur 4 du boîtier 1 en vue d'obtenir une information sur la position du feu piétons, cette pression déclenche, par l'intermédiaire des colonnes 13, de l'ergot 28 et de l'interrupteur 29, l'émission par le répétiteur sonore 30 d'un signal sonore signifiant la prise en compte de la demande, puis, selon que le feu piétons est vert ou rouge, d'une part, la mise ou non en action du moteur 6 afin de générer ou non dans le boîtier 1, par l'intermédiaire de la rondelle excentrique 7, des vibrations perceptibles au contact du boîtier 1, et d'autre part l'alimentation des diodes électroluminescentes 9 qui correspondent à l'état du feu piétons.

## Revendications

1. Dispositif permettant aux déficients visuels de repérer leur position en milieu urbain, et notamment de connaître le moment opportun pour traverser la chaussée sur le passage pour piétons, comprenant un boîtier (1) susceptible d'être solidarisé verticalement à un poteau (2) qui peut être celui d'un feu de signalisation tricolore (12), caractérisé en ce que ledit boîtier (1) est fermé à chacune de ses extrémités, supérieure et inférieure, par un capot (4, 3), et abritant, solidarisées à la face interne du capot supérieur (4), trois colonnes (13) montées coulissantes dans des glissières verticales (24) solidaires dudit boîtier (1), l'extrémité inférieure de chaque colonne (13) venant en appui sur un ressort (25) lui-même en appui sur un limiteur de position (26) solidaire du boîtier (1) et chaque colonne (13) comportant, au voisinage de son extrémité inférieure, un ergot (28) saillant perpendiculairement, positionné à courte distance au-dessus d'un interrupteur électrique (29) relié électriquement à un bornier (11) relié d'autre part à un dispositif (6, 7) générant des vibrations et relié également au feu de signalisation tricolore (12), qui l'alimente électriquement, ledit bornier (11) étant en outre relié à un module lumineux (8) incorporant des diodes électroluminescentes (9), placé dans une cavité (32) du boîtier (1), sous le capot supérieur (4), lequel comporte une partie translucide (10).

2. Dispositif selon la revendication 1, caractérisé en ce que le boîtier (1) renferme en outre un répétiteur sonore (30) disposé en regard d'une partie de la paroi dudit boîtier (1) percée d'une multiplicité d'orifices (31) permettant le passage du son, ledit répétiteur sonore (30) étant relié par l'intermédiaire du bornier (11) à l'interrupteur (29), le son émis signifiant la prise en compte de la demande formulée par la pression exercée sur le capot supérieur (4) du boîtier (1).

3. Dispositif selon la revendication 1, caractérisé en ce que le dispositif générant les vibrations est constitué d'un moteur (6) à rondelle excentrique (7), fixé sur une barrette (14) solidaire du boîtier (1) à sa base.

4. Dispositif selon la revendication 1, caractérisé en ce que l'ergot (28) de chaque colonne (13) est engagé dans l'orifice (27'), oblong dans le sens vertical, d'une biellette (27) solidaire du boîtier (1).

5. Dispositif selon la revendication 1, caractérisé en ce que le bornier (11) est relié électriquement au feu de signalisation (12) par l'intermédiaire d'un conducteur passant par un orifice (23) percé dans le boîtier (1) au niveau d'un évidement (22) permettant l'adaptation du boîtier (1) au poteau (2).

## Claims

1. Device which enables the visually handicapped to locate their position in urban surroundings, and in particular to determine when it is appropriate to cross the road on the pedestrian crossing, comprising a casing (1) capable of being secured vertically to a post (2) which may be that of a set of traffic lights (12), characterized in that the said casing (1) is closed at each of its ends, upper and lower, by a cover (4, 3) and housing [sic], secured to the inner face of the upper cap (4), three columns (13) mounted to slide in vertical slides (24) integral with the said casing (1), the lower end of each column (13) coming to bear on a spring (25) itself bearing on a position limiter (26) integral with the casing (1) and each column (13) including, in the vicinity of its lower end, a perpendicularly projecting pin (28) positioned a short distance above an electrical switch (29) electrically connected to a terminal strip (11) connected, on the other hand, to a device (6, 7) generating vibrations and also connected to the set of traffic lights (12), which supplies it electrically, the said terminal strip (11) being further connected to a light module (8) incorporating light-emitting diodes (9), which is placed in a cavity (32) of the casing (1), below the upper cover (4), which cover includes a translucent part (10).

2. Device according to Claim 1, characterized in that the casing (1) further contains a sound repeater (30) arranged facing a part of the wall of the said casing (1) which has pierced in it a multiplicity of orifices (31) allowing the sound to pass through, the said sound repeater (30) being connected via the terminal strip (11) to the switch (29), the emitted sound indicating that the request made by the pressure exerted on the upper cover (4) of the casing (1) has been taken into account.

3. Device according to Claim 1, characterized in that the device generating the vibrations consists of a motor (6) with an eccentric washer (7), which motor is fixed on a small bar (14) integral with the casing (1) at its base.

4. Device according to Claim 1, characterized in that the pin (28) of each column (13) is engaged in the orifice (27'), oblong in the vertical direction, of a link (27) integral with the casing (1).

5. Device according to Claim 1, characterized in that the terminal strip (11) is electrically connected to the set of traffic lights (12) via a conductor passing through an orifice (23) pierced in the casing (1) in the region of a recess (22) enabling the casing (1) to be fitted to the post (2).

## Patentansprüche

1. Vorrichtung, die es Sehbehinderten erlaubt, ihren Standort in einer städtischen Umgebung zu ermitteln, und insbesondere den zum Überqueren der Strasse auf dem Fußgängerüberweg günstigen Zeitpunkt zu erfahren, umfassend ein Gehäuse (1), das dazu ausgelegt ist, vertikal an einem Pfosten (2) befestigt zu sein, welcher derjenige einer Verkehrsampel (12) sein kann, **dadurch gekennzeichnet,** daß das Gehäuse (1) an seinem oberen und seinem unteren Ende jeweils durch einen Deckel (4,3) geschlossen ist, daß es drei mit der Innenseite des oberen Deckels (4) verbundene Säulen (13) aufnimmt, die in vertikalen, mit dem Gehäuse (1) verbundenen Schiebeführungen (24) verschiebbar angeordnet sind, wobei das untere Ende jeder Säule (13) in Anlage mit einer Feder (25) gelangt, die ihrerseits in Anlage mit einem mit dem Gehäuse (1) verbundenen Positionsbegrenzer (26) ist, und wobei jede Säule (13) in der Nähe ihres unteren Endes eine orthogonal vorstehende Nase (28) aufweist, die in geringem Abstand über einem elektrischen Schalter (29) angeordnet ist, der mit einer Klemmanschlußvorrichtung (11) elektrisch verbunden ist, welche andererseits mit einer Vibrationserzeugungsvorrichtung (6,7) und ebenfalls mit der sie elektrisch versorgenden Verkehrsampel (12) verbunden ist, wobei die Klemmanschlußvorrichtung (11) ferner mit einem Elektrolumineszenzdioden (9) enthaltenden Leuchtmodul (8) verbunden ist, das in einem Hohlraum (32) des Gehäuses (1) unter dem oberen Deckel (4) angeordnet ist, welcher einen lichtdurchlässigen Teil (10) aufweist.

2. Vorrichtung nach Anspruch 1, **dadurch gekennzeichnet,** daß das Gehäuse (1) ferner einen akkustischen Melder (30) enthält, der gegenüber einem Teil der Wand des Gehäuses (1) angeordnet ist, welcher mit einer Mehrzahl von den Durchtritt eines Tons erlaubenden Öffnungen (31) versehen ist, wobei der akkustische Melder (30) mittels der Klemmanschlußvorrichtung (11) mit dem Schalter (29) verbunden ist, wobei der ausgesandte Ton die Berücksichtigung der Anfrage signalisiert, die durch das Drücken auf den oberen Deckel (4) des Gehäuses (1) formuliert wurde.

3. Vorrichtung nach Anspruch 1, **dadurch gekennzeichnet,** daß die Vibrationserzeugungsvorrichtung durch einen Motor (6) mit einer exzentrischen Scheibe (7) gebildet ist, der auf einem mit der Basis des Gehäuses (1) verbundenen Steg (14) befestigt ist.

4. Vorrichtung nach Anspruch 1, **dadurch gekennzeichnet,** daß die Nase (28) jeder Säule (13) in die in vertikaler Richtung langgestreckte Öffnung (27') in einem mit dem Gehäuse (1) verbundenen Arm (27) eingreift.

5. Vorrichtung nach Anspruch 1, **dadurch gekennzeichnet,** daß die Klemmanschlußvorrichtung (11) mit der Verkehrsampel (12) mittels eines Leiters elektrisch verbunden ist, der durch eine Öffnung (23) verläuft, die im Gehäuse (1) im Bereich einer die Anpassung des Gehäuses (1) an den Pfosten (2) erlaubenden Aussparung (22) vorgesehen ist.
